# EUROPÄISCHE PATENTSCHRIFT

(11) **EP 1 125 628 B1**
(45) Veröffentlichungstag und Bekanntmachung des Hinweises auf die Patenterteilung: **21.06.2006**
(21) Anmeldenummer: 01102298.5
(22) Anmeldetag: 01.02.2001
(51) Int. Cl.: B01F 13/02

(54) **Pneumatischer Mischer**
Pneumatic mixer
Mélangeur pneumatic

(30) Priorität: 19.02.2000 DE 10007718
(43) Veröffentlichungstag der Anmeldung: 22.08.2001
(73) Patentinhaber: Grenzebach BSH GmbH, 36251 Bad Hersfeld (DE)
(72) Erfinder: Engler, Heinz, 36289 Friedewald (DE)
(74) Vertreter: Frese-Göddeke, Beate

(56) Entgegenhaltungen:
- DE-C- 19 650 559
- LU-A- 41 580
- US-A- 4 377 344
- US-A- 5 004 484
- US-A- 5 131 757

## Beschreibung

Die Erfindung geht von einem pneumatischen Mischer aus, der durch DE-PS 14 32 030 bekannt geworden ist.

Pneumatische Mischer, bei denen Mischköpfe zum Einsatz kommen, bestehen gewöhnlich aus einem Mischbehälter mit zylindrischem Oberteil und konischem, sich nach unten verengendem Unterteil, an dessen unterem Rand der Mischkopf befestigt ist. Der Mischkopf ist über eine Leitung oder über mehrere Leitungen mit einem Druckluftspeicher verbunden, der durch einen Kompressor mit Druckluft versorgt wird. Das zu mischende pulver- oder granulatförmige Gut wird durch mehrere Druckluftstöße hochgewirbelt. Bei jedem Stoß bildet sich infolge der eigenartigen Anordnung der Düsenkanäle in der Nähe der Behälterwand ein aufsteigender Wirbel und in der Umgebung der Behälterachse eine Wirbelsenke. Dadurch wird ein hochintensiver Mischeffekt erzielt.

Bei dem bekannten Mischkopf bildet ein starkwandiger Ring mit U-förmigem Querschnitt die achsnahe Wand, die untere Stirnwand und die äußere Wand des Druckraums. Ein am Unterteil eines Mischbehälters befestigter Flansch bildet die obere Stirnwand.

Die der Achse benachbarte Wand ist mit waagerechten, radialen Sacklöchern versehen, die von der Druckkammer ausgehen. Von den geschlossenen Enden der Sacklöcher gehen Düsenlöcher aus, deren Mündungen am oberen Rand einer sich nach oben konisch erweiternden ringförmigen Zone der Hüllfläche liegen. In jedem Düsenloch sitzt eine Lavaldüse, deren Achse schräg nach oben gerichtet ist, so daß die Luftstrahlen, die im Betrieb die Durchmischung bewirken, sich alle im gleichen Sinne schraubenlinienartig an der Innenfläche des Mischbehälters entlang bewegen.

Der starkwandige Ring ist aus Gußeisen hergestellt und daher sehr teuer. Die kompliziert geformten, schiefwinklig in eine konische Fläche einmündenden Düsenlöcher bedingen einen hohen Fertigungsaufwand. Wegen der abgeknickten Form der Düsenkanäle ist der Druckverlust sehr hoch.

In der von dem ringförmigen Mischkopf umschlossenen Auslauföffnung ist ein heb- und senkbarer Schließkegel angebracht. Bei abgesenkter Stellung sitzt er mit seiner Unterkante auf der erwähnten, sich konisch erweiternden ringförmigen Zone auf, und zwar in der Höhe der Düsenmündungen. Dies ist wichtig, damit unter den schräg nach oben gerichteten Düsenmündungen keine Strömungstoträume entstehen, in denen sich Nester von unvermischtem Mischgut bilden könnten. Die Auslauföffnung wird freigegeben, indem man den Schließkegel hebt. Dabei ist nicht nur das Gewicht des im Mischbehälter befindlichen Materials zu überwinden, sondern je nach Art des Materials auch starke innere Kräfte, die eine Brückenbildung oder Zusammenballung im unteren Bereich der Materialsäule bewirken. Dadurch wird nicht selten das Heben des Schließkegels unmöglich gemacht. Ein Ausbau des Schließkegels bei gefülltem Behälter ist in derartigen Fällen nicht möglich.

Ähnliche Mischköpfe, die ebenfalls dem Oberbegriff des Anspruchs 1 entsprechen, sind in DE-PS 11 72 934 und DE-PS 11 52 877 beschrieben worden.

Ein Mischkopf, der durch DE 25 22 088 C2 bekannt geworden ist, unterscheidet sich von den bisher erwähnten Mischköpfen unter anderem dadurch, daß relativ kurze Kanäle die obere Stirnwand durchdringen. Die Achsen der Kanäle sind - abweichend von dem zuerst angegebenen Stand der Technik- nicht abgeknickt, sondern geradlinig. Sie sind, ähnlich wie in den zuvor genannten Druckschriften beschrieben, schräg nach oben gerichtet.

DE-AS 21 21 636 beschreibt einen Mischkopf, bei dem der Druckraum mit einem oben offenen, schmalen, coaxialen inneren Ringraum in Verbindung steht, der durch verstellbare Leitelemente in eine Vielzahl von düsenartigen Kanälen unterteilt ist. Durch Verstellung der Leitelemente kann sowohl der Querschnitt als auch die Blasrichtung verändert werden. Dabei hat die Blasrichtung in jedem Fall eine aufwärtsgerichtete, eine radiale und eine tangentiale Komponente.

Aus EP 0 088 638 A2 ist ein Verteiler zum Zuführen eines fluidisierenden Gases zu einem Fließbettreaktor bekannt. Er umfaßt einen Kegel mit nach unten gerichteter Spitze, der in einem trichterförmigen Bodenteil eines Fließbettreaktors sitzt. Auf der Mantelfläche des Kegels sind mehrere schräg gestellte Rippen angebracht, so daß zwischen den Rippen Kanäle bestehen, die dem axial einströmenden Gas eine tangentiale Strömungskomponente aufzwingen.

Der Erfindung liegt die Aufgabe zugrunde, einen pneumatischen Mischer mit den Merkmalen des Oberbegriffs der Ansprüche 1 und 9 zu schaffen, der einfacher und billiger herstellbar ist.

Diese Aufgabe wird durch die kennzeichnenden Merkmale des Anspruchs 1 oder des Anspruchs 9 gelöst.

Allen diesen Ausführungen ist gemeinsam, daß die Ausnehmungen, welche die Düsenkanäle bilden oder aufnehmen, eine einfache Form haben und in einem einfach geformten Düsenring angeordnet sind.

Weitere vorteilhafte Merkmale der Erfindung sind Gegenstand der Unteransprüche.

Die Zeichnung dient zur Erläuterung der Erfindung anhand von vereinfacht dargestellten Ausführungsbeispielen.
Figur 1 zeigt einen vertikalen Schnitt durch einen Mischkopf gemäß der Erfindung.
Figur 2 zeigt eine Draufsicht auf den Mischkopf gemäß Figur 1.
Figur 3 zeigt eine Draufsicht auf einen Düsenring des Mischkopfes.
Figur 4 zeigt einen vertikalen Schnitt durch den Grundkörper des Mischkopfes.
Figur 5 zeigt einen vertikalen Schnitt durch einen vereinfachten Zwischenring des Mischkopfes.
Figur 6 zeigt eine Draufsicht auf einen anderen Düsenring.
Figur 7 zeigt einen vertikalen Schnitt durch den Düsenring gemäß Figur 6.
Figur 8 zeigt eine Draufsicht auf einen weiteren Düsenring.
Figur 9 zeigt einen vertikalen Schnitt durch einen weiteren Düsenring.
Figur 10 zeigt eine Draufsicht auf den Düsenring gemäß Figur 9.
Figur 11 zeigt einen vertikalen Schnitt durch einen weiteren Düsenring.
Figur 12 zeigt einen vertikalen Schnitt durch einen weiteren Mischkopf.

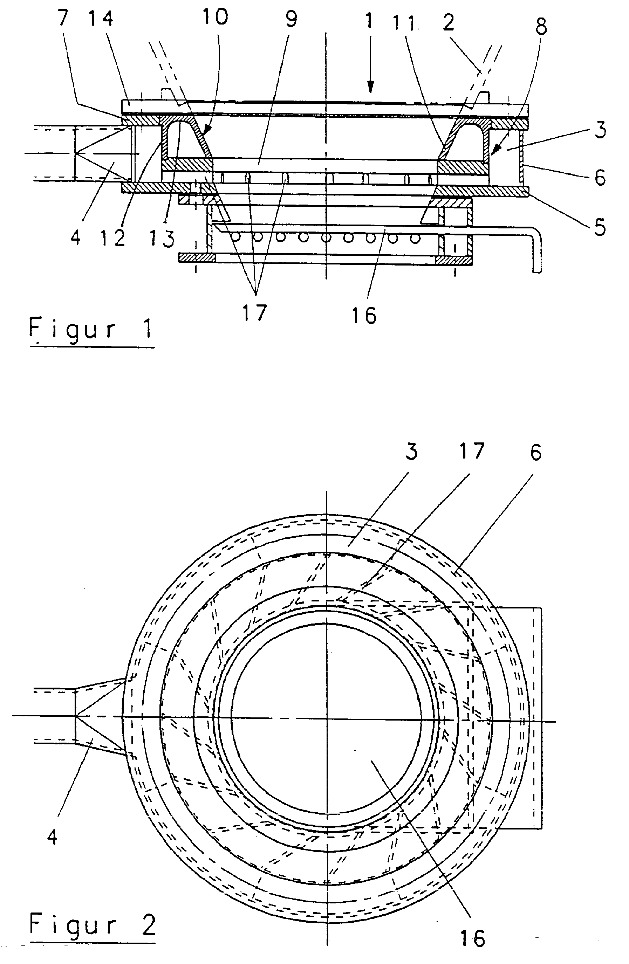

Figur 1 zeigt einen ringförmigen Mischkopf 1, der an einem nur angedeuteten konischen, sich nach unten verengenden Unterteil 2 eines nicht dargestellten Mischbehälters befestigt ist. Der Mischbehälter gehört zum Stand der Technik. Er hat im wesentlichen die aus der eingangs erwähnten DE-AS 14 32 0 30 ersichtliche Form und bedarf daher keiner weiteren Beschreibung.

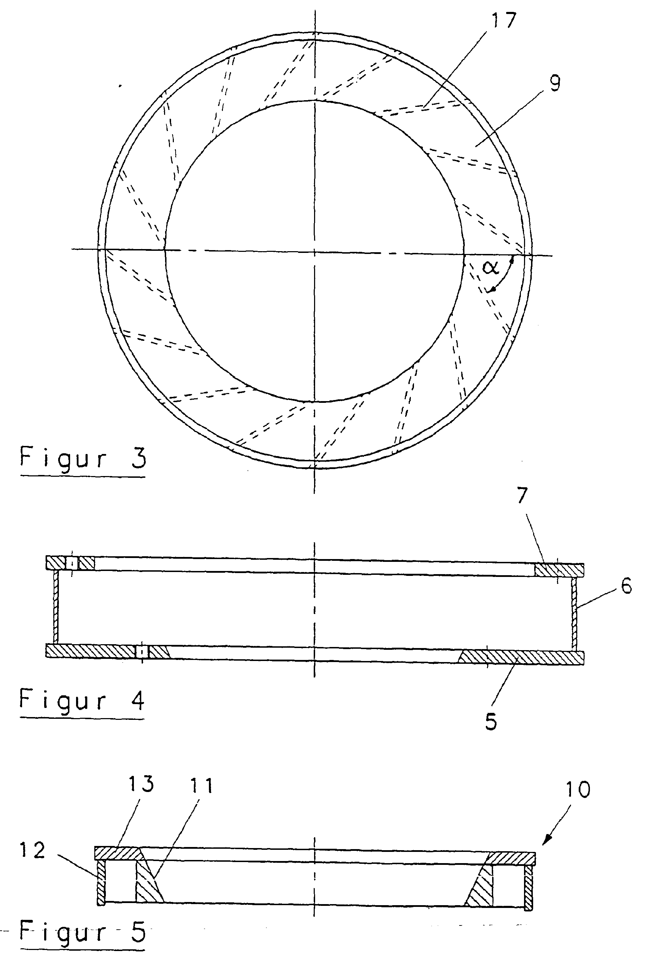

Der Mischkopf 1 hat eine ringförmige, im Querschnitt rechteckige Druckkammer 3, die im Einbauzustand über einen Anschluß 4 oder über mehrere gleichmäßig über dem Umfang verteilte derartige Anschlüsse mit einer Druckluftquelle in Verbindung steht. Sie ist nach Art eines Torus von Wänden umschlossen, und zwar von einem Bodenring 5, einer Außenwand 6, einem Abdeckring 7 und einer achsnahen Wand 8. Die Außenwand 6 besteht aus einem zylindrischen Blechmantel, dessen unterer Rand mit dem äußeren Rand des Bodenringes 5 und dessen oberer Rand mit dem äußeren Rand des Abdeckringes 7 verschweißt ist. Sie bildet zusammen mit dem Bodenring 5 und dem Abdeckring 7 den in Figur 4 separat dargestellten Grundkörper.

Die achsnahe Wand 8 ist schichtartig aufgebaut. Auf einer inneren Zone des Bodenringes 5 liegt ein flacher Düsenring 9 auf. Er umschließt eine kreisförmige Öffnung, welche mit der Öffnung des Bodenringes 5 deckungsgleich ist. Der Düsenring 9 hat ebene Stirnflächen. Auf dem Düsenring 9 sitzt ein Zwischenring 10, dessen Profil einem umgekehrten U ähnlich ist. Seine achsnahe Wandschale 11 ist konisch. Der Konuswinkel stimmt mit dem Konuswinkel des Unterteils 2 überein. Die Wandschale 11 des unten offenen Zwischenringes 10 liegt mit ihrem unteren Rand auf dem achsnahen Rand des Düsenringes 9 auf. Die äußere, der Druckkammer 3 benachbarte Wandschale 12 des Zwischenringes 10 ist zylindrisch und hat den gleichen Außendurchmesser wie der Düsenring 9. Sie greift mit ihrem unteren Rand formschlüssig in eine stufenartige Vertiefung am äußeren Rand des Düsenringes 9 ein, so daß dieser in Bezug auf den Zwischenring 10 zentriert ist. Die ebene Oberseite eines Brückenteils 13, welches den Zwischenraum zwischen der achsnahen Wandschale 11 und der achsfernen Wandschale 12 überbrückt, liegt genau in der gleichen Höhe wie die obere Stirnfläche des Abdeckringes 7. Der Außenrand des Brückenteils 13 ist an den inneren Durchmesser des Abdeckringes 7 angepaßt, so daß der Zwischenring 10 in dem Abdeckring 7 durch Formschluß zentriert ist. Ein Flansch 14, der im Einbauzustand am unteren Rand des Unterteils 2 angeschweißt ist, überdeckt sowohl den Abdeckring 7 als auch den Zwischenring 10. Zwischen dem Flansch 14 einerseits und dem Abdeckring 7 und dem Zwischenring 10 andererseits liegt eine ringförmige Dichtung aus elastischem Material. Der Abdeckring 7 ist durch Schrauben mit dem Flansch 14 verbunden. Der Düsenring 9 und der Zwischenring 10 sind zwischen der Bodenplatte 5 und dem Flansch 14 eingespannt. Sie werden allein durch die Einspannung und den Formschluß zusammengehalten und fixiert.

Figur 5 zeigt einen weiteren Zwischenring 10, bei dem die achsnahe Wandschale 11, die achsferne Wandschale 12 und das Brückenteil 13 separat hergestellt und miteinander verschweißt sind.

Unter dem Bodenring 5 ist ein Flachschieber 16 angebracht, mit dem sich die Öffnung des Bodenringes 5 wahlweise freigeben oder absperren läßt.

Der in Figur 3 separat veranschaulichte Düsenring 9 ist aus starkem Blech hergestellt. Seine Dicke steht zur Höhe der Druckkammer 3 etwa im Verhältnis 1:2 bis 1:5. Auf seiner dicht auf dem Bodenring 5 aufliegenden Unterseite ist er mit mehreren gleichmäßig verteilten eingefrästen Nuten 17 versehen, die sich von der äußeren Hüllfläche des Düsenringes 9 bis zu seiner achsnahen Hüllfläche erstrecken. Die Nuten 17 sind im Einbauzustand durch die Stirnfläche des Bodenringes 5, auf dem der Düsenring 9 aufliegt, abgedeckt und bilden auf diese Weise ringsum geschlossene Kanäle. Sie haben auf ihrer ganzen Länge einen gleichbleibenden rechteckigen Querschnitt. Sie verlaufen geradlinig und schließen mit einer zugeordneten radialen Linie -wie in Figur 3 verdeutlicht- einen spitzen Winkel α ein. Die Richtung der Nuten 17 hat daher neben einer radialen Komponente auch eine tangentiale Komponente, die für alle Nuten 17 gleich groß ist und in Bezug auf die Achse des Mischkopfes 1 den gleichen Drehsinn hat.

Der Düsenring 9 kann auch aus einem ebenen, glatten Blechring und mehreren separat hergestellten sektorartigen Scheiben bestehen, die in der Weise auf dem Blechring befestigt sind, daß sich zwischen je zwei benachbarten Scheiben eine Nut 17 befindet. Wenn die Nuten sehr eng nebeneinander angeordnet sind, können die sektorartigen Scheiben so schmal sein, daß sie eher als Rippen oder Speichen zu bezeichnen sind.

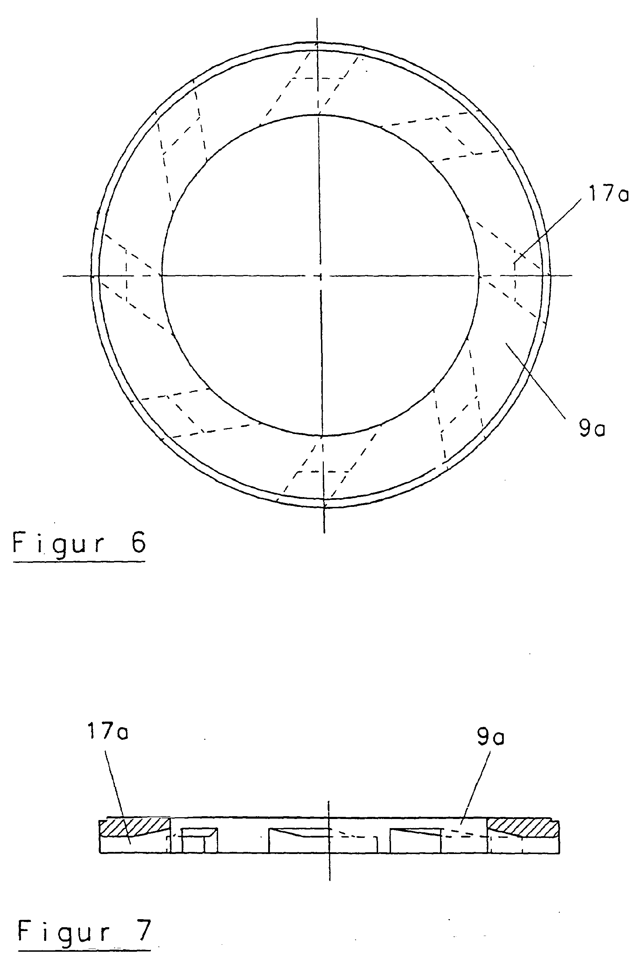

Der in Figur 6 und Figur 7 veranschaulichte Düsenring 9a weist im Vergleich zu dem zuvor beschriebenen Ausführungsbeispiel eine geringere Anzahl von Nuten 17a auf. Sie sind breiter als die Nuten 17. Der Nutengrund ist in der Nähe der Mündung, das heißt in der Nähe der inneren Hüllfläche des Düsenringes 9a abgeschrägt, so daß der Querschnitt der Nut 17a sich in der Nähe der Mündung in Richtung auf die Mündung keilartig erweitert.

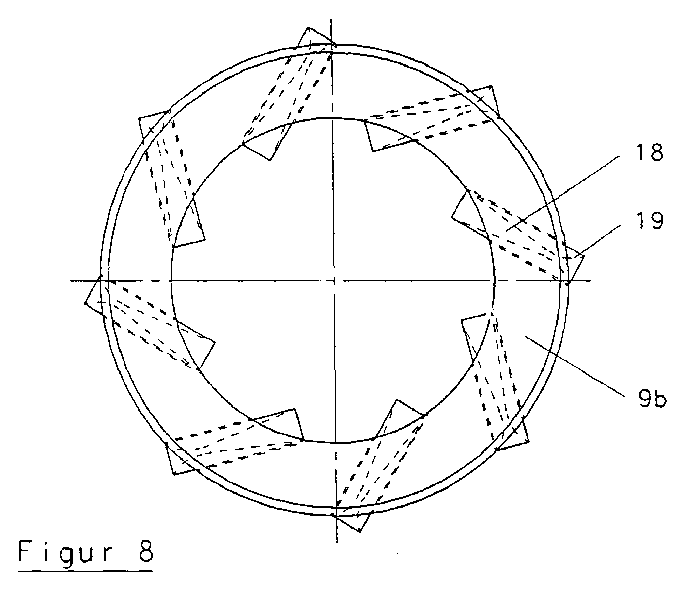

Bei dem Ausführungsbeispiel gemäß Figur 8 ist ein Düsenring 9b mit Nuten oder Bohrungen versehen, deren Querschnitt in Figur 8 nicht erkennbar ist. Sie entsprechen wahlweise den Nuten beziehungsweise Bohrungen der weiter unten beschriebenen Düsenringe 9c oder 9d. In den Nuten oder Bohrungen sind Röhrchen 18 eingeklemmt, die bei diesem Ausführungsbeispiel die eigentlichen Düsenkanäle bilden. Das Röhrchen 18 ist außen zylindrisch und hat im Innern die typische Form einer Lavaldüse. Von der Einströmöffnung, die in der Nähe der achsfernen Hüllfläche des Düsenringes 9b liegt, bis zu einer Engstelle, die sich etwa bei ein Fünftel bis ein Drittel der Länge befindet, verengt sich der lichte Querschnitt, so daß der Einströmbereich an eine Trompete erinnert. In Richtung auf die Mündung erweitert sich die Innenfläche konusartig. Der Konuswinkel beträgt 10° bis 14°. Die Kontur der drehsymmetrischen Innenfläche ist durch gestrichelte Linien 19 veranschaulicht. Die Achsen der Röhrchen 18 schließen -ähnlich wie die Nuten 17 in Figur 3- spitze Winkel mit zugeordneten radialen Linien ein.

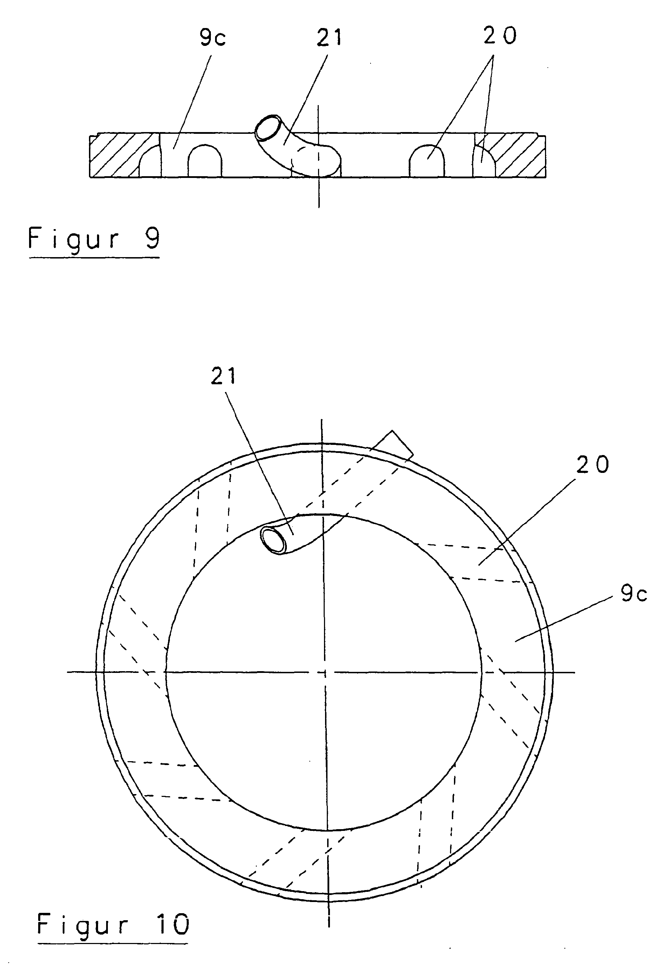

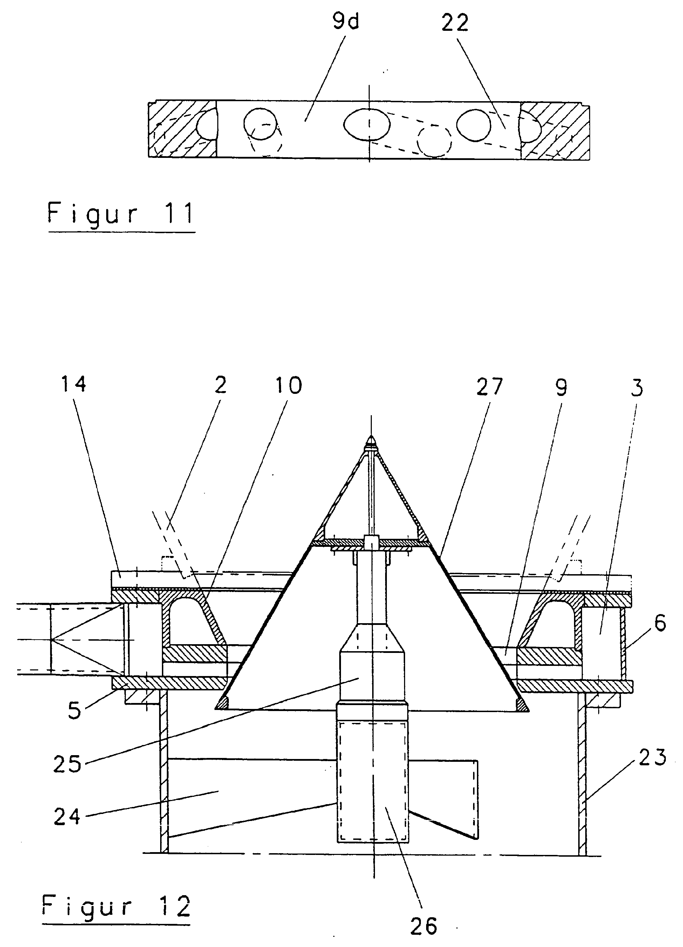

Figur 9 und Figur 10 veranschaulichen einen Düsenring 9c insbesondere für Mischköpfe, die beim Mischen abrasiver Güter zum Einsatz kommen. Er ist an der Unterseite mit Nuten 20 versehen, deren Anordnung in der Draufsicht etwa der in Figur 6 veranschaulichten Anordnung der Nuten 17a entspricht. Der Querschnitt der Nut 20 ist tunnelförmig. In jeder Nut 20 ist ein Röhrchen 21 eingeklemmt. Die zu beiden Seiten unter dem Röhrchen 21 verbliebenen Zwickel sind vorzugsweise offen. Sie bilden zusätzliche Kanäle für Luftströme, die zur Aufwirbelung des bodennahen Mischgutes beitragen. Die Zwickel können natürlich auch durch Einlagen oder Füllkörper abgedichtet sein. Es ist auch möglich, die Zwickel zu vermeiden, indem man den Querschnitt des Röhrchens 21 an den Querschnitt der Nut 20 anpaßt.

In Figur 9 und Figur 10 ist ein derartiges Röhrchen 21 der Einfachheit und Übersichtlichkeit halber nur in einer einzigen Nut 20 gezeichnet worden. Das Röhrchen 21 hat einen geraden, kreiszylindrischen Abschnitt, der in der Nut 20 sitzt, und einen gekrümmten Mündungsteil, der aus der achsnahen Hüllfläche des Düsenringes 9c herausragt. Dadurch wird erreicht, daß die Blasrichtung von der Achsrichtung des zylindrischen Abschnitts abgewinkelt ist. In der Position gemäß Figur 9 und Figur 10 hat die Blasrichtung eine nach oben gerichtete Komponente. Durch Drehen des Röhrchens 21 um die Achse des zylindrischen Abschnitts läßt sich auch eine tangentiale Komponente erzielen. Durch optimale Einstellung kann beim Mischen abrasiver Güter der Verschleiß an der Behälterwand minimiert werden. Das Röhrchen 21 kann leicht ausgetauscht werden, wenn sich an der Mündung Verschleiß zeigt.

Bei Düsenringen, die mit Röhrchen mit gekrümmtem Mündungsteil ausgestattet sind, können die Nuten 20 -abweichend von Figur 9- auch radial angeordnet sein.

Die unerläßliche tangentiale Komponente der Blasrichtung läßt sich allein durch den gekrümmten Mündungsteil des Röhrchens 21 erreichen, welches den eigentlichen Düsenkanal bildet.

Bei dem Ausführungsbeispiel gemäß Figur 11 ist ein Düsenring 9d mit Bohrungen 22 versehen, die sich zwischen der achsfernen und der achsnahen Hüllfläche des Düsenringes 9d erstrecken. In einer nicht gezeigten Draufsicht entspricht die Anordnung der Bohrungen 22 im wesentlichen der Anordnung der Nuten, die aus Figur 10 ersichtlich ist. Die Bohrungen sind schräg zu einer horizontalen Ebene angeordnet, so daß sie von der achsfernen Hüllfläche in Richtung auf die achsnahe Hüllfläche leicht ansteigen.

Abweichend von dem in Figur 11 veranschaulichten Ausführungsbeispiel, bei dem die Bohrungen 22 die Düsenkanäle bilden, dienen derartige Bohrungen bei anderen Ausführungsbeispielen zur Aufnahme von Röhrchen, die die eigentlichen Düsenkanäle bilden. Geeignete Röhrchen sind zum Beispiel die in Figur 8 gezeigten Röhrchen 18 oder die Röhrchen 21 gemäß den Figuren 9 und 10. In dem letzteren Falle läßt sich die erforderliche tangentiale Komponente der Blasrichtung selbst dann einstellen, wenn die Bohrungen -abweichend von Figur 12- radial ausgerichtet sind.

Bei dem in Figur 12 dargestellten Mischkopf ist an der Unterseite des Bodenringes 5 ein Auslaufstutzen 23 angeflanscht. In seinem Innern ist an Tragarmen 24 coaxial ein Zylinder 25 angeordnet. Darin sitzt ein Kolben 26. Dieser ist mit einem Schließkegel 27 verbunden. In der in Figur 9 veranschaulichten Schließstellung liegt der Mantel des Schließkegels 27 dicht an dem abgeschrägten unteren Innenrand des Bodenringes 5 an. Durch Absenken des Schließkegels 27 wird der Behälterauslauf freigegeben.

Der Mischkopf gemäß der Erfindung hat gegenüber vergleichbaren Mischköpfen, die zum Stand der Technik gehören, nicht nur den Vorteil, daß er sehr einfach herzustellen und daher wesentlich billiger ist.

Ein weiterer Vorteil besteht darin, daß er sich durch Austausch des Düsenringes leicht an unterschiedliche Mischgüter anpassen läßt.

Die Nuten beziehungsweise Bohrungen können auf dem Umfang wesentlich dichter angeordnet werden als die Düsen vergleichbarer Mischköpfe. Dadurch kann der erforderliche Volumenstrom bei wesentlich niedrigerem Druck erreicht werden. Dadurch wird zumindest bei kleinen Mischern oder bei Mischern, die zum Mischen von sehr feinkörnigem, pulverförmigem Material bestimmt sind, der bisher erforderliche Kompressor zur Erzeugung der Druckluft entbehrlich. Es genügt, den Luftspeicher an eine Druckluftleitung anzuschließen.

Die Befürchtung, die bei einigen Ausführungsbeispielen waagerechte Blasrichtung könne im Vergleich zu den bekannten, nach oben blasenden Mischköpfen negative Auswirkungen auf die Funktion oder das Mischergebnis haben, hat sich bei zahlreichen Versuchen als unbegründet erwiesen. Die waagerechte Blasrichtung in Verbindung mit der hierdurch ermöglichten bodennahen Anordnung der Mündungsöffnungen der Kanäle hat bei dem Ausführungsbeispiel gemäß Figur 1 den Vorteil, daß der Flachschieber in sehr geringem Abstand unter den Mündungsöffnungen angeordnet werden kann. Versuche an einem Plexiglasmodell haben gezeigt, daß der Flachschieber bei jedem Druckstoß völlig freigeblasen wird. Strömungstoträume und dadurch bedingte Nester wurden nicht beobachtet. Auf diese Weise wurde es erstmals möglich, den bisher üblichen Schließkegel durch einen weit billigeren Flachschieber zu ersetzen.

Auch der Mischkopf gemäß Figur 12 hat einen wichtigen Vorteil, welcher der Erfindung zu verdanken ist. Da die Mündungsöffnungen unmittelbar am Bodenring 5 angeordnet sind, kann ein Schließkegel eingesetzt werden, der in Schließstellung an der unteren Innenkante des Bodenringes 5 angreift. Der verbleibende kleine Zwickel zwischen Schließkegel 27 und Bodenring 5 wird bei jedem Druckstoß freigefegt. Der Schließkörper 27 kann im Falle einer Verstopfung leicht von unten ausgebaut werden.

Im Gegensatz zu bekannten Mischköpfen, bei denen das Mischgut in die nach oben gerichteten Düsenkanäle und sogar bis in die Druckkammer gelangen kann, bleiben bei dem neuen Mischkopf die Düsenkanäle und die Druckkammer völlig frei. Besondere Maßnahmen zur Verhinderung des Rückflusses sind nicht erforderlich.

## Patentansprüche

1. Pneumatischer Mischer mit einem zylindrischen Oberteil, mit einem konischen, sich nach unten verjüngendem Unterteil (2) und mit einem am unteren Rand des Unterteils (2) befestigten Mischkopf (1), der Mischkopf (1) umfassend
eine ringförmige, nach Art eines Torus von Wänden umschlossenen, an eine Druckluftquelle angeschlossene Druckkammer (3) und
mehrere in regelmäßigen Winkelabständen angeordnete, von der Druckkammer (3) ausgehende, die achsnahe Wand (8) durchdringende Düsenkanäle, die zumindest im Bereich ihrer Mündung eine tangentiale, bei allen Düsenkanälen in Bezug auf die Achse im gleichen Drehsinn gerichtete Richtungskomponente haben, **dadurch gekennzeichnet, daß** in der achsnahen Wand (8) der Druckkammer (3) ein getrennt hergestellter Düsenring (9, 9a, 9c) schichtartig zwischen zwei anderen ringförmigen Bauteilen (5, 10) sitzt und
daß zur Bildung oder zur Aufnahme der Düsenkanäle eine Stirnfläche des Düsenringes (9, 9a, 9c) mit Nuten (17, 17a) versehen und durch eine anliegende Gegenfläche eines anderen Bauteils (5) abgedeckt ist.

2. Pneumatischer Mischer nach Anspruch 1, **dadurch gekennzeichnet, daß** der Düsenring (9, 9a, 9c) einstückig aus Stahlblech hergestellt ist und daß eine Stirnfläche mit eingefrästen Nuten (17, 17a, 20) versehen ist.

3. Pneumatischer Mischer nach Anspruch 1, **dadurch gekennzeichnet, daß** der Düsenring (9, 9a, 9c) aus Stahlblech hergestellt ist, daß auf einer Stirnfläche mehrere sektorartige Scheiben oder Rippen befestigt sind und daßsich zwischen je zwei benachbarten Scheiben oder Rippen eine Nut (17, 17a) befindet.

4. Pneumatischer Mischer nach einem der Ansprüche 1 bis 3, **dadurch gekennzeichnet, daß** in den Nuten (20) Röhrchen (18, 21) sitzen, welche die Düsenkanäle bilden.

5. Pneumatischer Mischer nach Anspruch 4, **dadurch gekennzeichnet, daß** jede Nut (20) einen tunnelförmigen Querschnitt hat.

6. Pneumatischer Mischer nach Anspruch 4, **dadurch gekennzeichnet, daß** die Innenfläche (19) jedes Röhrchens (18) nach Art einer Lavaidüse geformt ist.

7. Pneumatischer Mischer nach Anspruch 4, **dadurch gekennzeichnet, daß** jedes Röhrchen (21) einen gekrümmten Mündungsteil aufweist, der aus der achsnahen Hüllfläche des Düsenringes (9c) herausragt, und daß die Blasrichtung an der Mündung eine tangentiale und/oder eine nach oben gerichtete Komponente aufweist.

8. Pneumatischer Mischer nach Anspruch 1, **dadurch gekennzeichnet, daß** jede Nut (17a) durch eine Abschrägung des Nutengrundes zumindest in der Nähe der Mündung keilartig erweitert ist.

9. Pneumatischer Mischer mit einem zylindrischen Oberteil, mit einem konischen, sich nach unten verjüngendem Unterteil (2) und mit einem am unteren Rand des Unterteils (2) befestigten Mischkopf (1), der Mischkopf (1) umfassend
eine ringförmige, nach Art eines Torus von Wänden umschlossenen, an eine Druckluftquelle angeschlossene Druckkammer (3) und
mehrere in regelmäßigen Winkelabständen angeordnete, von der Druckkammer (3) ausgehende, die achsnahe Wand (8) durchdringende Düsenkanäle, die zumindest im Bereich ihrer Mündung eine tangentiale, bei allen Düsenkanälen in Bezug auf die Achse im gleichen Drehsinn gerichtete Richtungskomponente haben, **dadurch gekennzeichnet, daß** in der achsnahen Wand (8) der Druckkammer (3) ein getrennt hergestellter Düsenring (9d) schichtartig zwischen zwei anderen ringförmigen Bauteilen (5, 10) sitzt,
daß der Düsenring (9d) mit Bohrungen (22) versehen ist, welche sich zwischen der achsfernen und der achsnahen Hüllfläche erstrecken und
daß die Bohrungen (22) die Düsenkanäle bilden oder aufnehmen.

10. Pneumatischer Mischer nach Anspruch 9, **dadurch gekennzeichnet, daß** jede Bohrung (22) von der achsfernen Hüllfläche des Düsenringes (9d) in Richtung auf die achsnahe Hüllfläche ansteigt.

11. Pneumatischer Mischer nach Anspruch 9 oder 10, **dadurch gekennzeichnet, daß** in den Bohrungen (22) Röhrchen (18, 21) sitzen, welche die Düsenkanäle bilden.

12. Pneumatischer Mischer nach Anspruch 11, **dadurch gekennzeichnet, daß** die Innenfläche (19) jedes Röhrchens (18) nach Art einer Lavaldüse geformt ist.

13. Pneumatischer Mischer nach Anspruch 11, **dadurch gekennzeichnet, daß** jedes Röhrchen (21) einen gekrümmten Mündungsteil aufweist, der aus der achsnahen Hüllfläche des Düsenringes (9c) herausragt, und daß die Blasrichtung an der Mündung eine tangentiale und/oder eine nach oben gerichtete Komponente aufweist.

14. Pneumatischer Mischer nach einem der Ansprüche 1 bis 13, **dadurch gekennzeichnet, daß** ein zylindrischer Blechmantel (6), dessen unterer Rand mit dem Bodenring (5) und dessen oberer Rand mit einem Abdeckring (7) verschweißt ist, die Außenwand der Druckkammer (3) bildet.

15. Pneumatischer Mischer nach Anspruch 14, **dadurch gekennzeichnet, daß** die Höhe des Blechmantels (6) größer ist als die Dicke des Düsenringes (9, 9a, 9b, 9c, 9d) und daß auf dem Düsenring ein Zwischenring (10) sitzt, der den oberen Teil der achsnahen Wand (8) der Druckkammer (3) bildet.

16. Pneumatischer Mischer nach Anspruch 15, **dadurch gekennzeichnet, daß** der Zwischenring (10) in der Öffnung des Abdeckringes (7) formschlüssig zentriert ist und durch formschlüssigen Eingriff in eine Ausnehmung des Düsenringes (9, 9a, 9b, 9c, 9d) diesen zentriert.

17. Pneumatischer Mischer nach Anspruch 15 oder 16, **dadurch gekennzeichnet, daß** der Düsenring (9, 9a, 9b, 9c, 9d) und der Zwischenring (10) zwischen dem Bodenring (5) und einem Flansch (14) eingespannt sind, an dessen Unterseite der Abdeckring (7) angeschraubt ist.

18. Pneumatischer Mischer nach einem der Ansprüche 1 bis 17, **gekennzeichnet durch** einen an der Unterseite des Bodenringes (5) angebrachten Flachschieber (16).

19. Pneumatischer Mischer nach einem der Ansprüche 1 bis 17, **dadurch gekennzeichnet, daß** an der Unterseite des Bodenringes (5) eine Tragvorrichtung (23, 24) eines heb- und senkbaren Schließkegels (27) angebracht ist, der in der angehobenen Stellung am unteren Innenrand des Bodenringes (5) dicht anliegt.

## Claims

1. A pneumatic mixer with a cylindrical upper part, a conical lower part (2) tapering downwards and a mixing head (1) fixed to the lower edge of the lower part (2), the mixing head (1) comprising an annular pressure chamber (3) which is surrounded by walls in the manner of a torus and connected to a compressed-air source, and a plurality of nozzle ducts which are arranged at regular angular intervals, start from the pressure chamber (3) and extend through the axially proximal wall (8) and which, at least in the region of their mouth, have a tangential directional component orientated in the same direction of rotation relative to the axis for all the nozzle ducts, **characterised in that** a separately manufactured nozzle ring (9, 9a, 9c) is arranged in the form of a layer between two other annular components (5, 10) in the axially proximal wall (8) of the pressure chamber (3) and **in that**, to form or receive the nozzle ducts, a front face of the nozzle ring (9, 9a, 9c) is provided with grooves (17, 17a) and is covered by an adjacent opposing surface of another component (5).

2. A pneumatic mixer according to claim 1, **characterised in that** the nozzle ring (9, 9a, 9c) is manufactured in one piece from steel sheet and **in that** a front face is provided with milled grooves (17, 17a, 20).

3. A pneumatic mixer according to claim 1, **characterised in that** the nozzle ring (9, 9a, 9c) is manufactured from steel sheet, **in that** a plurality of segment-type plates or ribs are fixed to a front face and **in that** a groove (17, 17a) is located between two respective adjacent plates or ribs.

4. A pneumatic mixer according to any one of claims 1 to 3, **characterised in that** tubes (18, 21), which form the nozzle ducts, are arranged in the grooves (20).

5. A pneumatic mixer according to claim 4, **characterised in that** each groove (20) has a tunnel-shaped cross-section.

6. A pneumatic mixer according to claim 4, **characterised in that** the inner surface (19) of each tube (18) is formed in the manner of a Laval nozzle.

7. A pneumatic mixer according to claim 4, **characterised in that** each tube (21) has a curved mouth part projecting from the axially proximal casing surface of the nozzle ring (9c) and **in that** the blowing direction at the mouth has a tangential and/or upwardly directed component.

8. A pneumatic mixer according to claim 1, **characterised in that** each groove (17a) is widened in the manner of a wedge at least in the vicinity of the mouth by chamfering the groove base.

9. A pneumatic mixer with a cylindrical upper part, a conical lower part (2) tapering downwards and a mixing head (1) fixed to the lower edge of the lower part (2), the mixing head (1) comprising an annular pressure chamber (3) which is surrounded by walls in the manner of a torus and connected to a compressed-air source, and a plurality of nozzle ducts which are arranged at regular angular intervals, start from the pressure chamber (3) and extend through the axially proximal wall (8) and which, at least in the region of their mouth, have a tangential directional component orientated in the same direction of rotation relative to the axis for all the nozzle ducts, **characterised in that** a separately manufactured nozzle ring (9d) is arranged in the form of a layer between two other annular components (5, 10) in the axially proximal wall (8) of the pressure chamber (3), **in that** the nozzle ring (9d) is provided with bores (22) extending between the axially distal and the axially proximal casing surface and **in that** the bores (22) form or receive the nozzle ducts.

10. A pneumatic mixer according to claim 9, **characterised in that** each bore (22) rises from the axially distal casing surface of the nozzle ring (9d) towards the axially proximal casing surface.

11. A pneumatic mixer according to claim 9 or 10, **characterised in that** tubes (18, 21), which form the nozzle ducts, are arranged in the bores (22).

12. A pneumatic mixer according to claim 11, **characterised in that** the inner surface (19) of each tube (18) is formed in the manner of a Laval nozzle.

13. A pneumatic mixer according to claim 11, **characterised in that** each tube (21) has a curved mouth part projecting from the axially proximal casing surface of the nozzle ring (9c) and **in that** the blowing direction at the mouth has a tangential and/or upwardly directed component.

14. A pneumatic mixer according to any one of claims 1 to 13, **characterised in that** a cylindrical sheet-metal jacket (6), the lower edge of which is welded to the base ring (5) and the upper edge of which is welded to a cover ring (7), forms the outer wall of the pressure chamber (3).

15. A pneumatic mixer according to claim 14, **characterised in that** the height of the sheet-metal jacket (6) is greater than the thickness of the nozzle ring (9, 9a, 9b, 9c, 9d) and **in that** an intermediate ring (10) sits on the nozzle ring and forms the upper part of the axially proximal wall (8) of the pressure chamber (3).

16. A pneumatic mixer according to claim 15, **characterised in that** the intermediate ring (10) is positively centred in the opening of the cover ring (7) and centres the nozzle ring (9, 9a, 9b, 9c, 9d) by means of positive engagement in a recess thereof.

17. A pneumatic mixer according to claim 15 or 16, **characterised in that** the nozzle ring (9, 9a, 9b, 9c, 9d) and the intermediate ring (10) are clamped between the base ring (5) and a flange (14), to the underside of which the cover ring (7) is screwed.

18. A pneumatic mixer according to any one of claims 1 to 17, **characterised by** a flat slide valve (16) mounted on the underside of the base ring (5).

19. A pneumatic mixer according to any one of claims 1 to 17, **characterised in that** a supporting device (23, 24) for a raisable and lowerable closing cone (27) is mounted on the underside of the base ring (5), and the closing cone (27) in its raised position lies tightly against the lower inner edge of the base ring (5).

## Revendications

1. Mélangeur pneumatique doté d'une partie supérieure cylindrique, avec une partie inférieure (2) conique, s'effilant vers le bas et avec une tête mélangeuse (1) fixée sur le bord inférieur de la partie inférieure (2), la tête mélangeuse (1) comprenant
une chambre de compression (3) annulaire, du type d'un tore, entourée de parois, raccordée à une source d'air comprimé et
plusieurs canaux d'écoulement disposés à des distances angulaires régulières, à partir de la chambre de compression (3), pénétrant dans la paroi proche de l'axe (8), qui possèdent au moins dans la zone de leur ouverture une composante directionnelle tangentielle, dirigée pour tous les canaux d'écoulement dans le même sens de rotation par rapport à l'axe, **caractérisé en ce qu'**un anneau de distribution (9, 9a, 9c) réalisé séparément est placé dans la paroi proche de l'axe (8) de la chambre de compression (3) à la manière d'une couche entre deux autres éléments structurels (5, 10) annulaires et
**en ce que**, pour former ou pour loger les canaux d'écoulement, une face frontale de l'anneau de distribution (9, 9a, 9c) est pourvue de rainures (17, 17a) et est recouverte par une surface antagoniste adjacente d'un autre élément structurel (5).

2. Mélangeur pneumatique selon la revendication 1, **caractérisé en ce que** l'anneau de distribution (9, 9a, 9c) est réalisé en une seule pièce en tôle et **en ce qu'**une face frontale est dotée de rainures fraisées (17, 17a, 20) .

3. Mélangeur pneumatique selon la revendication 1, **caractérisé en ce que** l'anneau de distribution (9, 9a, 9c) est réalisé en tôle, **en ce que** plusieurs disques ou ailettes sectoriels sont fixés sur une surface frontale et **en ce qu'**une rainure (17, 17a) se trouve entre respectivement deux disques ou ailettes voisins.

4. Mélangeur pneumatique selon l'une des revendications 1 à 3, **caractérisé en ce que** des tubes (18, 21) sont placés dans les rainures (20), qui forment les canaux d'écoulement.

5. Mélangeur pneumatique selon la revendication 4, **caractérisé en ce que** chaque rainure (20) possède une section transversale en forme de tunnel.

6. Mélangeur pneumatique selon la revendication 4, **caractérisé en ce que** la surface intérieure (19) de chaque tube (18) est formée à la manière d'une tuyère de Laval.

7. Mélangeur pneumatique selon la revendication 4, **caractérisé en ce que** chaque tube (21) présente une partie d'ouverture curviligne qui dépasse de la surface enveloppante de l'anneau de distribution (9c) proche de l'axe, et **en ce que** la direction de soufflage au niveau de l'ouverture présente une composante tangentielle et/ou une composante dirigée vers le haut.

8. Mélangeur pneumatique selon la revendication 1, **caractérisé en ce que** chaque rainure (17a) est élargie de manière cunéiforme par un chanfreinage du fond de la rainure, au moins à proximité de l'ouverture.

9. Mélangeur pneumatique doté d'une partie supérieure cylindrique, avec une partie inférieure (2) conique, s'effilant vers le bas et avec une tête mélangeuse (1) fixée sur le bord inférieur de la partie inférieure (2), la tête mélangeuse (1) comprenant
une chambre de compression (3) annulaire, du type d'un tore, entourée de parois, raccordée à une source d'air comprimé et
plusieurs canaux d'écoulement disposés à des distances angulaires régulières, à partir de la chambre de compression (3), pénétrant dans la paroi proche de l'axe (8), qui possèdent au moins dans la zone de leur ouverture une composante directionnelle tangentielle, dirigée pour tous les canaux d'écoulement dans le même sens de rotation par rapport à l'axe, **caractérisé en ce qu'**un anneau de distribution (9d) réalisé séparément est placé dans la paroi proche de l'axe (8) de la chambre de compression (3) à la manière d'une couche entre deux autres éléments structurels (5, 10) annulaires et
**en ce que** l'anneau de distribution (9d) est pourvu de perçages (22) qui s'étendent entre la surface enveloppante éloignée de l'axe et celle proche de l'axe et
**en ce que** les perçages (22) forment ou reçoivent les canaux d'écoulement.

10. Mélangeur pneumatique selon la revendication 9, **caractérisé en ce que** chaque perçage (22) s'élève de la surface enveloppante éloignée de l'axe de l'anneau de distribution (9d) en direction de la surface enveloppante proche de l'axe.

11. Mélangeur pneumatique selon la revendication 9 ou 10, **caractérisé en ce que** des tubes (18, 21) sont placés dans les perçages (22), qui forment les canaux d'écoulement.

12. Mélangeur pneumatique selon la revendication 11, **caractérisé en ce que** la surface intérieure (19) de chaque tube (18) est formée à la manière d'une tuyère de Laval.

13. Mélangeur pneumatique selon la revendication 11, **caractérisé en ce que** chaque tube (21) présente une partie d'ouverture curviligne qui dépasse de la surface enveloppante de l'anneau de distribution (9c) proche de l'axe et **en ce que** la direction de soufflage au niveau de l'ouverture présente une composante tangentielle et/ou une composante dirigée vers le haut.

14. Mélangeur pneumatique selon l'une des revendications 1 à 13, **caractérisé en ce qu'**un revêtement en tôle (6) cylindrique, dont le bord inférieur est soudé à l'anneau de fond (5) et dont le bord supérieur est soudé à un anneau de recouvrement (7), forme la paroi extérieure de la chambre de compression (3).

15. Mélangeur pneumatique selon la revendication 14, **caractérisé en ce que** la hauteur du revêtement en tôle (6) est plus importante que l'épaisseur de l'anneau de distribution (9, 9a, 9b, 9c, 9d) et **en ce qu'**un anneau intermédiaire (10) est placé sur l'anneau de distribution, qui forme la partie supérieure de la paroi proche de l'axe (8) de la chambre de compression (3).

16. Mélangeur pneumatique selon la revendication 15, **caractérisé en ce que** l'anneau intermédiaire (10) est géométriquement centré dans l'ouverture de l'anneau de recouvrement (7) et centre l'anneau de distribution (9, 9a, 9b, 9c, 9d) grâce à un engagement géométrique dans un creux de celui-ci.

17. Mélangeur pneumatique selon la revendication 15 ou 16, **caractérisé en ce que** l'anneau de distribution (9, 9a, 9b, 9c, 9d) et l'anneau intermédiaire (10) sont serrés entre l'anneau de fond (5) et une bride (14), au niveau de la face inférieure sur laquelle l'anneau de recouvrement (7) est vissé.

18. Mélangeur pneumatique selon l'une des revendications 1 à 17, **caractérisé par** un obturateur à tiroir (16), disposé au niveau de la face inférieure de l'anneau de fond (5).

19. Mélangeur pneumatique selon l'une des revendications 1 à 17, **caractérisé en ce qu'**un dispositif porteur (23, 24) d'un cône de fermeture (27) pouvant se lever et se baisser est disposé au niveau de la face inférieure de l'anneau de fond (5), qui adhère hermétiquement, dans la position élevée, au bord intérieur inférieur de l'anneau de fond (5).
